# EUROPÄISCHE PATENTSCHRIFT

(11) **EP 2 119 919 B1**
(45) Veröffentlichungstag und Bekanntmachung des Hinweises auf die Patenterteilung: **05.12.2012**
(21) Anmeldenummer: 09157452.5
(22) Anmeldetag: 07.04.2009
(51) Int. Cl.: F16B 5/02, F16B 43/00

(54) **Befestigungsanordnung**
Mounting assembly
Agencement de fixation

(30) Priorität: 05.05.2008 DE 102008001552
(43) Veröffentlichungstag der Anmeldung: 18.11.2009
(73) Patentinhaber: HILTI Aktiengesellschaft, 9494 Schaan (LI)
(72) Erfinder: Rosenkranz, Falk, 9658 Wildhaus (CH); Basche, Holger, 6812 Meiningen (AT); Sander, Bernhard, 81379 München (DE); Schäffer, Marc, 6800 Feldkirch-Nofels (AT)

(56) Entgegenhaltungen:
- US-A- 4 435 112
- US-A1- 2008 025 814

## Beschreibung

Die Erfindung betrifft eine Befestigungsanordnung eines Anbauteils an einem Bauteil, wie z. B. an einer Decke oder an einer Wand aus einem mineralischen Material, wie z. B. Beton oder Mauerwerk, mit einem Befestigungselement, wie z. B. ein Spreizdübel oder eine Betonschraube, und mit einem Querkraftübertragungselement, wobei das Anbauteil eine Durchführöffnung für das Befestigungselement aufweist, und wobei das Befestigungselement einen sich entlang einer Längsachse erstreckenden Schaft mit einem an einem ersten Ende radial abragenden Halteabschnitt und ausgehend vom gegenüberliegenden zweiten, freien Ende einen Verankerungsabschnitt zur Verankerung im Bauteil aufweist, und wobei das Querkraftübertragungselement zwischen dem Halteabschnitt und dem Verankerungsabschnitt in der Durchführöffnung des Anbauteils an dem Befestigungselement vorgesehen ist, und wobei das Querkraftübertragungselement eine axiale Länge aufweist, die kleiner als seine axiale Ausgangslänge ist, wobei das Querkraftübertragungselement über den Halteabschnitt des Befestigungselementes auf seine axiale Länge reduziert ist.

Anbauteile werden am Bauteil üblicherweise mit mehr als einem Befestigungselement befestigt, weshalb diese Art der Befestigung als Gruppenbefestigung bezeichnet wird. In einem ersten Schritt werden entsprechend der Anzahl und der Ausgestaltung der Befestigungselemente Bohrlöcher in dem Bauteil erstellt, dann das Anbauteil derart am Bauteil positioniert, dass dessen Durchführöffnungen mit den Bohrlöchern weitgehend übereinstimmen und anschliessend die Befestigungselemente in einer Durchsteckmontage, d. h. durch die Durchführöffnungen hindurch, in die Bohrlöcher eingeführt und in diesen verankert werden.

Damit beispielsweise eine gewindefurchende Schraube als Befestigungselement, wie z. B. eine Betonschraube, welche ihr Gegengewinde beim Setzen selbst in der Wandung des Bohrlochs ausbildet, durch die vorteilhaft runden Durchführöffnungen im Anbauteil hindurchführbar ist, müssen die minimalen Innenabmessungen der Durchführöffnungen mindestens dem Gewindeaussendurchmesser der Schraube entsprechen. Da sich das Gewinde einer derartigen Schraube üblicherweise nicht bis zum ersten Ende des Schafts mit dem Halteabschnitt erstreckt, ist im gesetzten Zustand des Befestigungselementes ein verhältnismässig grosser Spalt zwischen der Innenwandung der Durchführöffnung im Anbauteil und der Schaftaussenseite der Schraube vorhanden. Zudem werden üblicherweise am Bau die Bohrlöcher mit grosser Toleranz gebohrt, weshalb die Durchführöffnungen zusätzlich etwas grösser in ihren Innenabmessungen, als es für die Durchführung des Verankerungsabschnitts des Befestigungselementes erforderlich ist, ausgebildet, z. B. gebohrt werden. Aus den vorgenannten Gründen ist eine solche Befestigungsanordnung für Gruppenbefestigungen zur Abtragung von Scher- bzw. Querlasten nicht geeignet.

Aus der US 3,418,013 ist eine Schraube als Befestigungselement bekannt, die anschliessend an den Schraubenkopf als Halteabschnitt am ersten Ende des Schafts an dessen Aussenseite bereichsweise ein Trapezgewinde aufweist, das im gesetzten Zustand des Befestigungselementes mit der Innenwandung der Durchführöffnung in Anlage kommt und somit eine Abtragung von Scher- bzw. Querlasten ermöglicht.

Nachteilig an der bekannten Lösung ist, dass die Fläche zur Übertragung der anfallenden Quer- bzw. Scherkräfte begrenzt ist. Weiter werden bei dieser Ausgestaltung des Befestigungselementes die Querkräfte nicht gleichmässig von dem Anbauteil auf das Befestigungselement übertragen, was bei höheren Querkräften zu einer bereichsweisen Schädigung des Anbauteils und/oder des Befestigungselementes führt.

Aus der US 2007/0071524 A1 ist eine Schraube mit einem im Aussendurchmesser abgestuften Schraubenkopf beziehungsweise mit einer unterhalb des Schraubenkopfs angeordneten, im Aussendurchmesser abgestuften Schaftverdickung bekannt, welche im verspannten Zustand der Befestigungsanordnung zumindest bereichsweise in die Durchführöffnung im Anbauteil eindringt.

Nachteilig an der bekannten Lösung ist, dass für jede Anbauteildicke eine separate Schraube erforderlich ist, damit eine grösstmögliche Fläche zur Übertragung der Querkräfte zur Verfügung steht. Wird diese Schraube mit einem Anbauteil verwendet, welches eine grössere Anbauteildicke als die axiale Erstreckung der entsprechenden Schaftverdickung aufweist, werden die Querkräfte in einem Abstand zu dem Bauteil in die Schraube eingeleitet, woraus sich unerwünschte Biegemomente in der Schraube als Befestigungselement ergeben. Wird diese Schraube mit einem Anbauteil verwendet, welches eine kleinere Anbauteildicke als die axiale Erstreckung der entsprechenden Schaftverdickung aufweist, lässt sich der Schraubenkopf nicht in Anlage mit dem Anbauteil bringen, so dass dieses nicht fest am Bauteil befestigt ist.

Aus der EP 0 774 587 B1 ist eine Befestigungsanordnung mit einem Befestigungselement und mit einem vor Ort hergestellten Querkraftübertragungselement bekannt. Der Spalt zwischen dem Befestigungselement und der Durchführöffnung im Anbauteil wird nach dem Setzen des Befestigungselementes mit einer aushärtbaren Masse verfüllt. Nach dem Aushärten der Masse können die Querkräfte vom dem Anbauteil auf das Befestigungselement übertragen werden.

Nachteilig an der bekannten Lösung ist, dass die Montage für eine derartige Befestigungsanordnung aufwändig ist. Zusätzlich zu den Elementen der Befestigungsanordnung werden zusätzliche Elemente, wie Behältnisse für die aushärtbare Masse und eine Ausbringvorrichtung, wie z. B. ein Dispenser, zum Ausbringen der zumeist mehrkomponentigen aushärtbaren Masse benötigt. Zudem kann erst nach dem Aushärten der Masse eine Querkraft über das vor Ort erstellte Querkraftübertragungselement übertragen werden.

Aus der US 2008/0025814 A1 ist eine Hülse aus einem weichen, duktilen Material bekannt, die sich deformieren und Zwischenräume zwischen einem Ankerbolzen und einem Loch auffüllen kann. Aus der US 4,435,112 A ist eine Hülse bekannt, welche die Last zwischen einem Schraubenkopf und dem Untergrund aufnimmt.

Aufgabe der Erfindung ist es, eine Befestigungsanordnung eines Anbauteils an einem Bauteil zu schaffen, die universell für verschiedene Anbauteildicken verwendbar ist.

Die Aufgabe ist durch die Merkmale des unabhängigen Anspruchs 1 gelöst. Vorteilhafte Weiterbildungen sind in den Unteransprüchen dargelegt.

Die erfindungsgemässe Befestigungsanordnung ist dadurch gekennzeichnet, dass das Querkraftübertragungselement einen ersten Axialabschnitt und zumindest einen zweiten mit dem ersten Axialabschnitt zumindest bereichsweise überlappenden Axialabschnitt aufweist, wobei die Axialabschnitte relativ zueinander zumindest in axialer Richtung versetzbar sind.

Gemäss der Erfindung weist das Querkraftübertragungselement eine axiale Länge auf, die kleiner als seine axiale Ausgangslänge ist, wobei das Querkraftübertragungselement über den Halteabschnitt des Befestigungselementes auf seine axiale Länge reduziert ist.

Beim Setzen beziehungsweise beim Verspannen des Befestigungselementes wird der radial abragende Halteabschnitt des Befestigungselementes in Richtung des Anbauteils versetzt, wobei das Querkraftübertragungselement ausgehend von seiner axialen Ausgangslänge auf eine axiale Länge im eingebauten Zustand reduziert bzw. gestaucht wird, die bei der Anlage des Halteabschnitts des Befestigungselementes an dem Anbauteil im Wesentlichen der Anbauteildicke entspricht. Der Halteabschnitt kann unabhängig der Anbauteildicke mit dem Anbauteil in Anlage gebracht werden, ohne dass für jede Anbauteildicke dem Anwender ein entsprechend ausgebildetes Befestigungselement zur Verfügung gestellt werden muss.

Bei der Reduktion des Querkraftübertragungselementes ausgehend von seiner axialen Ausgangslänge auf die axiale Länge mittels des Halteabschnitts des Befestigungselementes dehnt sich, in Abhängigkeit der Eigenschaften des zu dessen Herstellung verwendeten Materials, das Querkraftübertragungselement gegebenenfalls radial nach aussen und/oder radial nach innen aus, womit allfällige Spalte zwischen dem Querkraftübertragungselement und der Innenwandung der Durchführöffnung im Anbauteil bzw. dem Schaft des Befestigungselementes verschlossen werden. Dies gewährleistet in einer vorteilhaften Weise eine spielfreie Übertragung der Querkräfte von dem Anbauteil auf das oder die Befestigungselemente.

Somit wird über die gesamte dafür zur Verfügung stehende Fläche der Innenwandung der Durchführöffnung eine Übertragung von Querkräften in das Befestigungselement sichergestellt. Mit der erfindungsgemässen Befestigungsanordnung ist nicht nur eine einfache Montage gewährleistet, sondern auch bei einer Gruppenbefestigung ist eine gleichmässige Einleitung der Querkräfte bei jedem der Befestigungselemente in diese sichergestellt.

Das Querkraftübertragungselement weist vorteilhaft eine hülsenförmige oder prismatische beziehungsweise zumindest an diese Form angenäherte Ausgestaltung mit einer Öffnung zur zumindest bereichsweisen Aufnahme eines Schaftabschnitts des Befestigungselementes auf. Die Innenabmessungen, z. B. der Innendurchmesser bei einem im Querschnitt runden Schaft des Befestigungselementes, des Querkraftübertragungselementes entsprechen im Wesentlichen der entsprechenden Aussenabmessungen, z. B. dem Aussendurchmesser bei einem im Querschnitt runden Schaft des Befestigungselementes, des Schafts. Die Aussenabmessungen, z. B. der Aussendurchmesser bei einer im Querschnitt runden Durchführöffnung im Anbauteil, des Querkraftübertragungselementes entsprechen im Wesentlichen den entsprechenden Innenabmessungen, z. B. dem Innendurchmesser bei einer im Querschnitt runden Durchführöffnung, der Durchführöffnung.

Dem Anwender wird vorteilhaft ein Befestigungselement mit einem direkt am Schaft angeordneten Querkraftübertragungselement zur Verfügung gestellt. Alternativ wird das Querkraftübertragungselement bei der Montage der Befestigungsanordnung am Schaft des Befestigungselementes angeordnet, wozu das hülsenförmige Querkraftübertragungselement beispielsweise mit einem Längsschlitz versehen ist oder auf das Befestigungselement aufgeschoben beziehungsweise aufgeschraubt wird.

Das Befestigungselement ist besonders vorteilhaft eine Betonschraube, die als Halteabschnitt einen Schraubenkopf mit einem Drehangriffsmittel, z. B. einen Aussensechskant oder einen Innenmehrkant, für ein Drehmitnahmemittel eines Setzgerätes sowie als Verankerungsabschnitt ein selbstfurchendes Gewinde aufweist.

Anstelle eines selbstfurchenden Gewindes kann eine Schraube als Befestigungselement auch einen vom zweiten Ende des Schafts ausgehenden Gewindeabschnitt als Verankerungsabschnitt aufweisen, auf den z. B. eine Mutter als Kontermittel aufschraubbar ist. Diese Art eines Befestigungselementes findet beispielsweise bei Befestigungsanordnungen Anwendung, die von zwei gegenüberliegenden Seiten zugänglich sind.

Alternativ ist das Befestigungsmittel ein Spreizdübel, der als Halteabschnitt einen Schraubenkopf mit einem Drehangriffsmittel und als Verankerungsabschnitt eine Spreizeinrichtung aufweist. Die Spreizeinrichtung umfasst beispielsweise einen Spreizkörper und eine von dem Spreizkörper aufweitbare Spreizhülse. Weiter kann das Befestigungselement auch einen Verankerungsabschnitt aufweisen, der beispielsweise mit einer Profilierung versehen ist und der zur Verankerung in eine in das Bohrloch eingebrachte aushärtbare Masse gesetzt wird.

Anstelle eines Schraubenkopfs als Halteabschnitt kann jedes dieser Befestigungselemente auch einen vom ersten Ende des Schafts ausgehenden Gewindeabschnitt aufweisen, auf den eine Mutter, optional mit einer Unterlegscheibe, aufschraubbar ist. Beim Aufschrauben werden die Mutter und gegebenenfalls die Unterlegscheibe in Richtung des Anbauteils versetzt, wobei das Querkraftübertragungselement von dieser in axialer Richtung in der axialen Länge reduziert wird.

Vorzugsweise ist das Querkraftübertragungselement ein Federelement, dessen axiale Ausgangslänge sich leicht an die jeweilige Anbauteildicke anpassen lässt. Die Aussenabmessungen, z. B. der Aussendurchmesser, des Federelementes entsprechen dabei im Wesentlichen den entsprechenden Innenabmessungen der Durchführöffnung im Anbauteil. Die Innenabmessungen des Federelementes entsprechen dabei im Wesentlichen den entsprechenden Aussenabmessungen des Schafts des Befestigungselementes.

Erfindungsgemäss weist das Querkraftübertragungselement einen ersten Axialabschnitt und zumindest einen zweiten mit dem ersten Axialabschnitt zumindest bereichsweise überlappenden Axialabschnitt auf, wobei die Axialabschnitte relativ zueinander zumindest in axialer Richtung versetzbar sind. Beim Reduzieren der axialen Länge ausgehend von der axialen Ausgangslänge des Querkraftübertragungselementes kommen die bereits bereichsweise überlappenden Abschnitte in einem grösseren Mass in

Überlappung, so dass eine ausreichend grosse Fläche zur Übertragung der Querkräfte von dem Anbauteil auf das Befestigungselement zur Verfügung steht. Vorzugsweise weist das Querkraftübertragungselement im eingebauten Zustand eine axiale Erstreckung der Überlappung auf, die grösser als die Hälfte der Anbauteildicke ist. Das Querkraftübertragungselement ist beispielsweise als Napffeder ausgebildet, deren Wicklungen sich vorteilhaft bereits im unverspannten Zustand des Befestigungselementes bereichsweise überlappen und somit die wenigstens zwei Axialabschnitte ausbilden.

Bevorzugt ist das Querkraftübertragungselement einteilig ausgebildet, was eine einfache Montage der Befestigungsanordnung sowie eine wirtschaftliche Fertigung insbesondere des Querkraftübertragungselementes gewährleistet.

Vorzugsweise ist ein den Halteabschnitt des Befestigungselementes radial überragender Signalisierungsabschnitt an einem dem Halteabschnitt des Befestigungselementes zugewandten Ende des Querkraftübertragungselementes vorgesehen. Der Signalisierungsabschnitt ermöglicht im gesetzten Zustand des Befestigungselementes dem Anwender sowie auch einer Kontrollperson eine visuelle Kontrolle von aussen, ob bei der gesetzten Befestigungsanordnung ein Querkraftübertragungselement vorgesehen wurde. Vorteilhaft ist der Signalisierungsabschnitt ein ringförmiges Element, wobei eine dabei vorhandene innen liegende Öffnung ein Durchführen des Befestigungselementes in den Bauteil weiterhin gewährleistet. Alternativ ist der Signalisierungsabschnitt ein Materialabschnitt der im eingebauten Zustand bereichsweise den Halteabschnitt des Befestigungselementes radial überragt. Der Signalisierungsabschnitt ist beispielsweise einteilig, z. B. in einem Guss mit dem Querkraftübertragungselement ausgeformt. Alternativ ist der Signalisierungsabschnitt ein separates Teil, das an dem Querkraftübertragungselement angeordnet oder bei der Montage der Befestigungsanordnung an diesem vorgesehen ist.

Vorteilhaft ist das Querkraftübertragungselement aus einem elastischen Material gefertigt, was eine leichte Verformung des Querkraftübertragungselementes beim Verspannen der Befestigungsanordnung gewährleistet. Alternativ ist das Querkraftübertragungselement aus einem nicht-elastischen, jedoch zumindest bereichsweise stauchbaren Material gefertigt.

Vorzugsweise ist das Querkraftübertragungselement aus einem Kunststoff, vorteilhaft in einem Spritz-/Gussverfahren gefertigt, was eine einfache und wirtschaftliche Fertigung des Querkraftübertragungselementes ermöglicht. Geeignet sind im Wesentlichen alle Kunststoffe, die eine ausreichende Festigkeit und Modul aufweisen, um in Richtung der wirkenden Querkräfte eine angemessene Kraftübertragung gewährleisten zu können. Alternativ ist das Querkraftübertragungselement beispielsweise aus einem für diesen Verwendungszweck geeigneten Metall gefertigt.

Die Erfindung wird nachstehend anhand von Ausführungsbeispielen näher erläutert. Es zeigen:
- Fig. 1: Ein erstes, nicht von Anspruch 1 umfasstes Ausführungsbeispiel einer Befestigungsanordnung im Detailschnitt;
- Fig. 2: ein zweites Ausführungsbeispiel einer Befestigungsanordnung im Detailschnitt;
- Fig. 3: ein drittes, nicht von Anspruch 1 umfasstes Ausführungsbeispiel eines Querkraftübertragungselementes in Seitenansicht;
- Fig. 4: ein viertes, nicht von Anspruch 1 umfasstes Ausführungsbeispiel eines Querkraftübertragungselementes in Seitenansicht; und
- Fig. 5: eine Variante des in Fig. 4 dargestellten Querkraftübertragungselementes in Seitenansicht.

Grundsätzlich sind in den Figuren gleiche Teile mit den gleichen Bezugszeichen versehen.

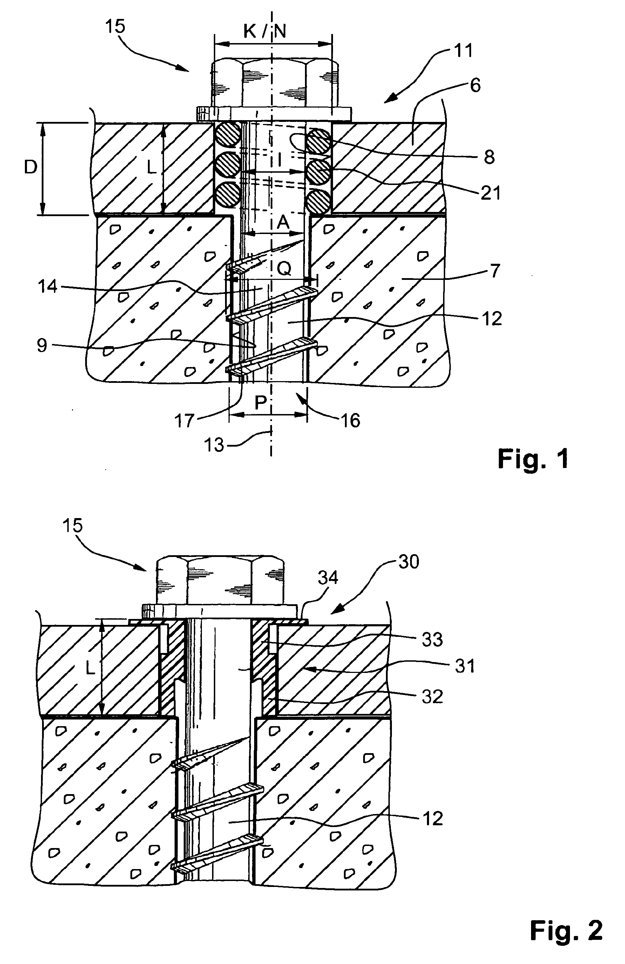

Die in der Figur 1 dargestellte Befestigungsanordnung 11 eines Anbauteils 6 an einem Bauteil 7 umfasst eine Betonschraube als Befestigungselement 12 und ein Querkraftübertragungselement 21. Das Anbauteil 6 weist eine in diesem Ausführungsbeispiel runde Durchführöffnung 8 für das Befestigungselement 12 und eine Anbauteildicke D auf. Das Befestigungselement 12 weist einen sich entlang einer Längsachse 13 erstreckenden Schaft 14 mit einem an einem ersten Ende radial abragenden Halteabschnitt 15 in Form eines Schraubenkopfes und ausgehend vom gegenüberliegenden zweiten, freien Ende einen Verankerungsabschnitt 16 mit einem selbstfurchenden Gewinde 17 zur Verankerung im Bauteil 7 auf.

Das hülsenförmige Querkraftübertragungselement 21 ist ein Federelement in Form einer Schraubenfeder aus Metall und derart an dem Befestigungselement 12 vorgesehen, dass dieses im gesetzten Zustand des Befestigungselementes 12 in der Durchführöffnung 8 des Anbauteils 6 zu liegen kommt. Der Innendurchmesser I des Querkraftübertragungselementes 21 entspricht im Wesentlichen dem Aussendurchmesser A des Schafts 14 und der Aussendurchmesser K des Querkraftübertragungselementes 21 entspricht im Wesentlichen dem Innendurchmesser N der Durchführöffnung 8. Das Querkraftübertragungselement 21 weist eine axiale Ausgangslänge H auf, die grösser als die Anbauteildicke D ist. Das Querkraftübertragungselement 21 weist im eingebauten eine axiale Länge L auf, die kleiner als seine axiale Ausgangslänge H ist, wobei das Querkraftübertragungselement 21 über den Halteabschnitt 15 des Befestigungselementes 12 auf seine axiale Länge L reduziert ist.

Zur Montage der Befestigungsanordnung 11 wird zuerst an der betreffenden Stelle ein Bohrloch 9 in das Bauteil 7 mit einem Durchmesser P erstellt, der kleiner als der Aussengewindedurchmesser Q des als Betonschraube ausgebildeten Befestigungselementes 12 ist. Anschliessend wird das Anbauteil 6 derart zu dem erstellten Bohrloch 9 am Bauteil 7 positioniert, dass das Befestigungselement 12 in das Bohrloch einführbar ist. Für eine Durchsteckmontage des Befestigungselementes 12 ist der Innendurchmesser N der Durchführöffnung 8 etwas grösser als der Aussengewindedurchmesser Q des Befestigungselementes 12 ausgebildet.

An dem Befestigungselement 12 wurde das Querkraftübertragungselement 21 bereits werkseitig angeordnet. Der Anwender führt das Befestigungselement 12 mit dem freien Ende des Schafts 14 durch die Durchführöffnung 8 hindurch in das Bohrloch 9 und schraubt dieses in das Bohrloch 9 ein, bis der Halteabschnitt 15 des Befestigungselementes 12 mit dem Anbauteil 6 in Anlage kommt. Dabei wird das Querkraftübertragungselement 21 von dem Halteabschnitt 15 ausgehend von seiner axialen Ausgangslänge H auf die axiale Länge L reduziert, welche im Wesentlichen der Anbauteildicke D entspricht. Über die Kontaktflächen zwischen dem Anbauteil 6 und dem Querkraftübertragungselement 21 sowie über die Kontaktflächen zwischen dem Querkraftübertragungselement 21 und dem Befestigungselement 12 ist eine vorteilhafte Übertragung von Querkräften von dem Anbauteil 6 auf das Befestigungselement 12 gewährleistet.

Bei der Ausführung der Erfindung gemäss der Figur 2 weist das einteilig ausgebildete Querkraftübertragungselement 31 der Befestigungsanordnung 30 einen ersten Axialabschnitt 32 und einen zweiten mit dem ersten Axialabschnitt 32 bereichsweise überlappenden Axialabschnitt 33 auf, wobei die Axialabschnitte 32 und 33 von dem Halteabschnitt 15 des Befestigungselementes 12 relativ zueinander in axialer Richtung versetzbar sind. Das Querkraftübertragungselement 31 ist aus einem Kunststoff gefertigt. Bei der Reduktion der axialen Ausgangslänge H des Querkraftübertragungselementes 31 auf die axiale Länge L dehnt sich das Querkraftübertragungselement 31 vorteilhaft radial aus, wobei ein allfälliger Spalt zwischen dem Querkraftübertragungselement 31 und dem Befestigungselement 12 beziehungsweise zwischen dem Querkraftübertragungselement 31 und dem Anbauteil 6 geschlossen wird. An dem dem Halteabschnitt 15 des Befestigungselementes 12 zugewandten Ende des Querkraftübertragungselementes 31 ist ein den Halteabschnitt 15 des Befestigungselementes 12 radial überragender, vorteilhaft ringförmiger Signalisierungsabschnitt 34 vorgesehen. Anhand des im gesetzten Zustand der Befestigungsanordnung 30 radial vorstehenden Signalisierungsabschnitts 34 erkennt der Anwender wie auch eine Kontrollperson mit einem Blick, dass bei dieser Befestigungsanordnung 30 ein Querkraftübertragungselement 31 vorgesehen wurde.

Der Signalisierungsabschnitt 34 ist in diesem Ausführungsbeispiel einteilig mit dem Querkraftübertragungselement 31 ausgebildet. Es versteht sich jedoch, dass z. B. bei einem Querkraftübertragungselement 21, wie es in der Figur 1 dargestellt ist, ebenfalls ein Signalisierungsabschnitt als separates, loses oder an dem Querkraftübertragungselement 21 festgelegtes Teil vorgesehen sein kann.

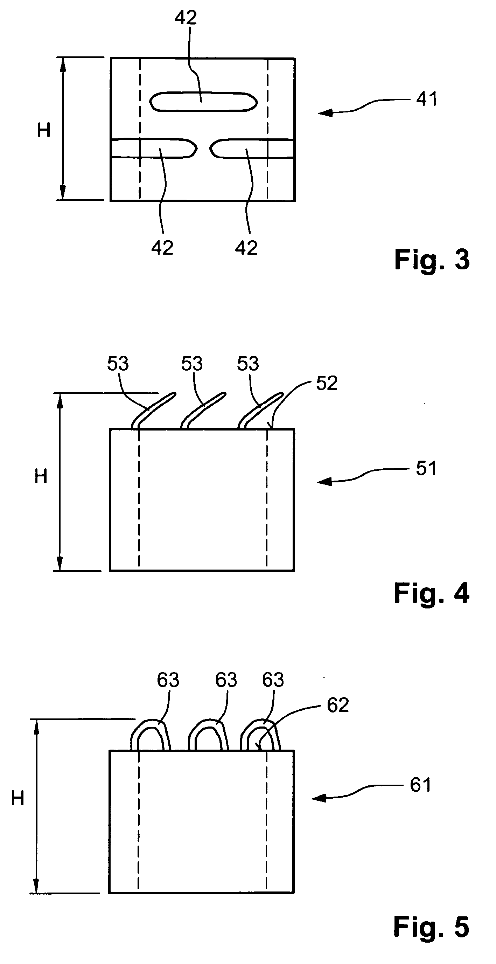

Das hülsenförmige Querkraftübertragungselement 41 gemäss der Figur 3 weist mehrere Stauchöffnungen 42 auf, die in zwei axial zueinander beabstandeten Reihen, umfänglich bereichsweise einander überlappend in der Wandung des Querkraftübertragungselementes 41 vorgesehen sind.

In Figur 4 weist das hülsenförmige Querkraftübertragungselement 51 in axialer Richtung abragende Federelemente 53 am freien Rand 52 des Querkraftübertragungselementes 51 auf, welche als einseitig auskragende Fahnen ausgebildet sind.

In Figur 5 weist das hülsenförmige Querkraftübertragungselement 61 in axialer Richtung abragende Federelemente 63 in Form von Bogenabschnitte am freien Rand 62 des Querkraftübertragungselementes 61 auf.

Das Querkraftübertragungselement 51 wie auch das Querkraftübertragungselement 61 sind vorteilhaft einteilig ausgebildet und aus einem Kunststoff gefertigt, wobei die in axialer Richtung abragende Federelemente 53 bzw. 63 vorteilhaft gleichzeitig mit dem Querkraftübertragungselement 51 bzw. 61 ausgebildet sind.

## Patentansprüche

1. Befestigungsanordnung eines Anbauteils (6) an einem Bauteil (7) mit einem Befestigungselement (12) und mit einem Querkraftübertragungselement (21; 31; 41; 51; 61), wobei
das Anbauteil (6) eine Durchführöffnung (8) für das Befestigungselement (12) aufweist, und wobei
das Befestigungselement (12) einen sich entlang einer Längsachse (13) erstreckenden Schaft (14) mit einem an einem ersten Ende radial abragenden Halteabschnitt (15) und ausgehend vom gegenüberliegenden zweiten, freien Ende einen Verankerungsabschnitt (16) zur Verankerung im Bauteil (7) aufweist, und wobei
das Querkraftübertragungselement (21; 31; 41; 51; 61) zwischen dem Halteabschnitt (15) und dem Verankerungsabschnitt (16) in der Durchführöffnung (8) des Anbauteils (6) an dem Befestigungselement (12) vorgesehen ist, und wobei
das Querkraftübertragungselement (21; 31; 41; 51; 61) eine axiale Länge (L) aufweist, die kleiner als seine axiale Ausgangslänge (H) ist, wobei das Querkraftübertragungselement (21; 31; 41; 51; 61) über den Halteabschnitt (15) des Befestigungselementes (12) auf seine axiale Länge (L) reduziert ist, **dadurch gekennzeichnet, dass**
das Querkraftübertragungselement (31) einen ersten Axialabschnitt (32) und zumindest einen zweiten mit dem ersten Axialabschnitt (32) zumindest bereichsweise überlappenden Axialabschnitt (33) aufweist, wobei die Axialabschnitte (32, 33) relativ zueinander zumindest in axialer Richtung versetzbar sind.

2. Befestigungsanordnung nach Anspruch 1, **dadurch gekennzeichnet, dass** das Querkraftübertragungselement (31) einteilig ausgebildet ist.

3. Befestigungsanordnung nach einem der Ansprüche 1 oder 2, **dadurch gekennzeichnet, dass** ein den Halteabschnitt (15) des Befestigungselementes (12) radial überragender Signalisierungsabschnitt (34) an einem dem Halteabschnitt (15) des Befestigungselementes (12) zugewandten Ende des Querkraftübertragungselementes (31) vorgesehen ist.

4. Befestigungsanordnung nach einem der Ansprüche 1 bis 3, **dadurch gekennzeichnet, dass** das Querkraftübertragungselement (31) aus einem Kunststoff gefertigt ist.

5. Befestigungsanordnung nach einem der Ansprüche 1 bis 4, **dadurch gekennzeichnet, dass** das Befestigungselement (12) eine Betonschraube ist.

## Claims

1. Fastening arrangement for fastening a mounting part (6) to a component (7), comprising a fastening element (12) and an element (21; 31; 41; 51; 61) for transmitting transverse forces, wherein
the mounting part (6) has a through opening (8) for the fastening element (12), the fastening element (12) has a shank (14) extending along a longitudinal axis (13) and comprising a holding portion (15) projecting radially from a first end and an anchoring portion (16) departing from the opposing second free end for anchoring in the component (7),
the element (21; 31; 41; 51; 61) for transmitting transverse forces is provided on the fastening element (12) between the holding portion (15) and the anchoring portion (16) in the through opening (8) in the mounting part (6), and
the element (21; 31; 41; 51; 61) for transmitting transverse forces has an axial length (L) that is smaller than its initial axial length (H), the element (21; 31; 41; 51; 61) for transmitting transverse forces being reduced to its axial length (L) by means of the holding portion (15) of the fastening element (12), **characterised in that**
the element (31) for transmitting transverse forces has a first axial portion (32) and at least a second axial portion (33) overlapping with the first axial portion (32) at least in some areas, the axial portions (32, 33) being displaceable relative to one another at least in the axial direction.

2. Fastening arrangement according to claim 1, **characterised in that** the element (31) for transmitting transverse forces is formed in one piece.

3. Fastening arrangement according to either of claims 1 or 2, **characterised in that** an indicator portion (34) projecting radially beyond the holding portion (15) of the fastening element (12) is provided at an end of the element (31) for transmitting transverse forces directed towards the holding portion (15) of the fastening element (12).

4. Fastening arrangement according to one of claims 1 to 3, **characterised in that** the element (31) for transmitting transverse forces is made of a plastic material.

5. Fastening arrangement according to one of claims 1 to 4, **characterised in that** the fastening element (12) is a concrete screw.

## Revendications

1. Ensemble de fixation d'une pièce de montage (6) sur un composant de construction (7), comportant un élément de fixation (12) et un élément de transmission de force de cisaillement (21 ; 31 ; 41 ; 51 ; 61), dans lequel
la pièce de montage (6) comporte une ouverture traversante (8) pour l'élément de fixation (12), et dans lequel
l'élément de fixation (12) comporte une tige (14) s'étendant le long d'un axe longitudinal (13) avec une partie de retenue (15) faisant saillie radialement à une première extrémité et, en partant de la seconde extrémité libre opposée, une partie d'ancrage (16) pour un ancrage dans le composant de construction (7), et dans lequel
l'élément de transmission de force de cisaillement (21 ; 31 ; 41 ; 51 ; 61) est agencé entre la partie de retenue (15) et la partie d'ancrage (16) dans l'ouverture traversante (8) de la pièce de montage (6) sur l'élément de fixation (12), et dans lequel
l'élément de transmission de force de cisaillement (21 ; 31 ; 41 ; 51 ; 61) présente une longueur axiale (L) qui est plus petite que sa longueur axiale initiale (H), dans lequel l'élément de transmission de force de cisaillement (21 ; 31 ; 41 ; 51 ; 61) est réduit à sa longueur axiale (L) par la partie de retenue (15) de l'élément de fixation (12), **caractérisé en ce que**
l'élément de transmission de force de cisaillement (31) comporte une première partie axiale (32) et au moins une seconde partie axiale (33) chevauchant, au moins dans certaines zones, la première partie axiale (32), dans lequel les parties axiales (32, 33) peuvent être déplacés l'une par rapport à l'autre au moins dans la direction axiale.

2. Ensemble de fixation selon la revendication 1, **caractérisé en ce que** l'élément de transmission de force de cisaillement (31) est formé d'un seul tenant.

3. Ensemble de fixation selon l'une quelconque des revendications 1 ou 2, **caractérisé en ce qu'**une partie indicatrice (32) faisant saillie radialement à partir de la partie de retenue (15) de l'élément de fixation (12) est agencée sur une extrémité de l'élément de transmission de force de cisaillement (31) dirigée vers la partie de retenue (15) de l'élément de fixation (12).

4. Ensemble de fixation selon l'une quelconque des revendications 1 à 3, **caractérisé en ce que** l'élément de transmission de force de cisaillement (31) est fabriqué à partir d'une matière plastique.

5. Ensemble de fixation selon l'une quelconque des revendications 1 à 4, **caractérisé en ce que** l'élément de fixation (12) est une vis de scellement.
